# EUROPEAN PATENT APPLICATION

(11) **EP 4 683 275 A1**
(43) Date of publication of application: **21.01.2026**
(21) Application number: 24306208.0
(22) Date of filing: 18.07.2024
(51) Int. Cl.: H04L 27/26

(54) **PROTECTIVE RESOURCE ALLOCATION IN MIXED NUMEROLOGY DEVICE TO DEVICE COMMUNICATIONS**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: CIOCHINA, Cristina, 35000 RENNES (FR)
(74) Representative: Plasseraud IP

(57) **Abstract**

The disclosure is related to a method performed by a first UE configured to use subcarriers from a first set of subcarriers spaced by S^{A}= k_{A}Δf (k_{A} is an integer ≥ 1, Δf is a base frequency spacing), comprising:
- obtaining information on at least a second UE, in a radiofrequency environment of the first UE, and configured to use subcarriers from a second set of subcarriers spaced by S^{B}= k_{B}Δf (k_{B} is an integer ≥ 1),
wherein, upon determination by the first UE that S^{B} is different from S^{A} and if k_{A} is not a multiple of k_{B}, the method further comprises:
- reducing the first set by removing at least one subcarrier which is the closest to the second set subcarriers and which does not respect S^{B} with the second set subcarriers, and
- selecting for a current communication at least one subcarrier remaining in the reduced first set.

## Description

### TECHNICAL FIELD

The present disclosure relates to the building of a set of subcarriers that a user equipment can use as telecommunication resources, notably but not limitedly in a context of device-to-device communications.

### BACKGROUND ART

Device-to-device communications, or sidelink communications, is more and more used, for various purposes, such as in-factories, in-home, or in vehicular deployments. In these configurations, sidelink-communicating devices with different capabilities, different numerologies and/or different radio access technologies (RAT) might need to coexist and share the same channel and the same frequency band, i.e. resource pool. However, inter-numerology interferences occur when two devices with different subcarrier spacings (SCS) use adjacent frequency resources. A transmission with a given subcarrier spacing in a given frequency band creates interference upon part or all of the subcarriers with a different SCS in neighboring adjacent frequency bands, with the exception of the specific case when the different SCS in the neighboring adjacent frequency band is an integer multiple of the given SCS in the given frequency band.

Sidelink devices can include large industrial machines using advanced processing and having specific needs in terms of SCS optimization, having long life cycle, and/or small loT devices, e.g. wearable devices and sensors, having limited capabilities, possibility implementing one single SCS, and with a rather short life which may be frequently replaced. An operator or some specific devices could need to simultaneously communicate with all or part of the available devices, while they coexist in the same resource pool.

Specifically, for device-to-device communications in a household, such coexistence of several connected devices (or "user equipment", noted "UE" below) in the same resource pool is expected by the user to be achieved on an ad hoc basis, without any specific planning, pre-configuration or prior knowledge of the equipment. Hence in this situation, each device must be able to operate within the pool of available resources in an optimized way, without interfering with the other operating devices using the pool or having reserved part of the pool, and regardless their age or technology. To avoid such interferences, specific optimizations of resource allocation between UEs are needed.

The problem of cross-numerology interference is often discussed in standardization documentation. There, the most straightforward and most used way is to schedule the different numerologies in different bandwidth parts separated by a protection band, or in different resource pools in the case of sidelink communications. In specific vehicular applications for example, the problem of having multiple sidelink UEs, of different RAT (e.g. LTE and NR), coexisting in the same resource pool has been partially addressed but optimized only for the case when the SCS is the same between UEs of different RAT. No particular protection was designed to limit the cross-numerology interference. In this approach, there is no adaptation of the size or type of the protection band, and there is not any optimization of the resource allocation for each UE. Further, cross-numerology interferences between UEs are not considered, and, in other sidelink communications not restricted to vehicular applications, the separation in several bandwidth parts is not possible without a centralized scheduler. In other words, currently, sidelink UEs with different numerologies cannot coexist in the same frequency resource pool without performance loss.

There is therefore a need to provide a method for enabling an optimized coexistence of sidelink devices with different capabilities in terms of SCS and RAT, notably in the same resource pool.

### SUMMARY

The present disclosure aims to improve the situation.

To that end, according to a first aspect, the present disclosure relates to a method performed by a first communicating user equipment configured to use subcarriers from a first set of subcarriers spaced by a first spacing S^{A}= k_{A}Δf where k_{A} is an integer equal or superior to 1 and Δf is a base frequency spacing, the method comprising:
- obtaining information of at least a second communicating user equipment, in a radiofrequency environment of the first communicating user equipment, and configured to use subcarriers from a second set of subcarriers spaced by a second spacing S^{B}= k_{B}Δf where k_{B} is an integer equal or superior to 1,
wherein, upon determination by the first user equipment that said second spacing k_{B} is different from the first spacing k_{A} and if k_{A} is not a multiple of k_{B}, the method further comprises:
- reducing the first set by removing at least one subcarrier which is the closest to the subcarriers of the second set and which does not respect said second spacing with the subcarriers of the second set, and
- selecting for a current communication at least one subcarrier remaining in the reduced first set.

In the definition of the method given above, a subcarrier f, from the first set is understood "to respect said second subcarrier spacing" S^{B} with a subcarrier f₂ from the second set when abs(f₁-f₂) is equal to S^{B} or to a multiple of S^{B}.

Moreover, in the disclosed method, the condition "k_{A} is not a multiple of k_{B}" is given because, otherwise (if k_{A} is a multiple of k_{B}), there exists no subcarrier (which respects the first spacing and) "which does not respect said second spacing with the subcarriers of the second set". That is, if k_{A} is a multiple of k_{B}, all subcarriers from the first set respect said second spacing with the subcarriers of the second set.

Therefore, the present description makes it possible to avoid the risk of selecting from the first set of possible subcarriers that the first UE (User Equipment) can use, at least one subcarrier which may be interfered by a subcarrier used by the second UE. Reversely, the present description makes it possible to limit (totally or at least partially) the number of subcarriers from the first set which may cause interference to the second UE. Thus, interference is reduced.

In an embodiment, said removing from the first set can be applied to a first chosen number of subcarriers which are the closest to the subcarriers of the second set and which do not respect said second spacing with the subcarriers of the second set.

This first number can be chosen especially to protect the first UE from the interference the second UE can cause.

In this embodiment typically, the first number can depend at least on a radiofrequency power received from the second user equipment. For example, if this received power level is high (that is, if the potential interference is strong), a higher first number of subcarriers is removed. Thus, protection against interference is efficiently achieved.

Alternatively or complementarily, this first number can depend at least on relative values of k_{A} and k_{B}.

For example, if k_{B} is largely superior to k_{A}, subcarriers from the second set close to subcarriers from the first set cause interference upon a large number of subcarriers from the first set, and hence the first number may be large. For example, the first number may be depending on or proportional to k_{B}/k_{A}. For example, the first number may depend on whether or not k_{B} is superior to k_{A}. For example, the first number may depend on the lowest common multiple of k_{B} and k_{A}.

For example, if k_{B} is largely inferior to k_{A}, subcarriers from the second set close to subcarriers from the first set have quickly decaying secondary lobes and cause little interference upon the subcarriers from the first set, and hence the first number may be small. For example, the first number may be depending on or proportional to k_{B}/k_{A}. For example, the first number may depend on whether or not k_{A} is superior to k_{B}. For example, the first number may depend on the lowest common multiple of k_{B} and k_{A}.

Alternatively or complementarily, this first number can depend on the minimum distance between a subcarrier from the first set and a subcarrier from the second set.

Thus, the first number is optimized to achieve a good tradeoff between throughput and protection against interference.

In an embodiment where k_{B} is not a multiple of k_{A}, the first set can be reduced by further removing at least one subcarrier which is the closest to the subcarriers of the second set and which respects said second spacing with the subcarriers of the second set.

The above condition "if k_{B} is not a multiple of k_{A}" can be explained as follows: if at the contrary k_{B} is a multiple of k_{A}, this so-removed subcarrier would never bother the neighbor UE, and there would not be any need to remove it. Thus, the throughput of the first UE is maximized without causing interference upon the second UE.

In this embodiment, the aforesaid further removing from the first set is applied to a second chosen number of subcarriers of the first set which are the closest to the subcarriers of the second set and which respect said second spacing with the subcarriers of the second set.

This second number can be chosen so as to avoid or limit the interference that the first UE can cause to its neighbors (and typically the aforesaid second UE).

In this embodiment, the second number can depend at least on an emission power of the first user equipment. Alternatively or complementarily, it may also depend on the radiofrequency power received from the second user equipment. Thus, the amount of interference potentially caused to neighbouring UEs, and particularly to the second UE, is controlled and the throughput penalty suffered by the first UE is minimized.

Alternatively or complementarily, the second number can depend further at least on a priority associated to the current communication of the first user equipment and/or to a communication of the second user equipment using subcarriers from the second set of subcarriers.

Alternatively or complementarily, information of a type of communication technology used by the second user equipment is obtained by the first equipment, and the second number further depends on whether the first and second user equipment use different communication technologies.

Thus, with this embodiment, reinforced protection can be performed depending on the communication technology. For example, reinforced protection is applied to protect transmissions with a previous technology unable of using self-protective methods.

It can depend for instance on the priority of the communication of the first UE relatively to the communication of the second UE. Thus, protection of communications with higher priority is reinforced.

The first number and the second number may further be equal or different.

The second number can depend also at least on relative values of k_{A} and k_{B}.

For example, if k_{A} is largely superior to k_{B}, subcarriers from the first set close to subcarriers from the second set cause interference upon a large number of subcarriers from the second set, and hence the first number may be small. For example, the second number may be depending on or may be inversely proportional to k_{A}/k_{B}. For example, the second number may depend on whether or not k_{A} is superior to k_{B}. For example, the second number may depend on the lowest common multiple of k_{B} and k_{A}.

Alternatively or complementarily, this second number can depend on the minimum distance between a subcarrier from the first set and a subcarrier from the second set.

Thus, the second number is optimized to achieve a good tradeoff between throughput and protection against interference.

In an embodiment, at least one subcarrier among a plurality of subcarriers of the first set which are the closest to the subcarriers of the second set and which respect said second spacing with the subcarriers of the second set is kept in said first set.

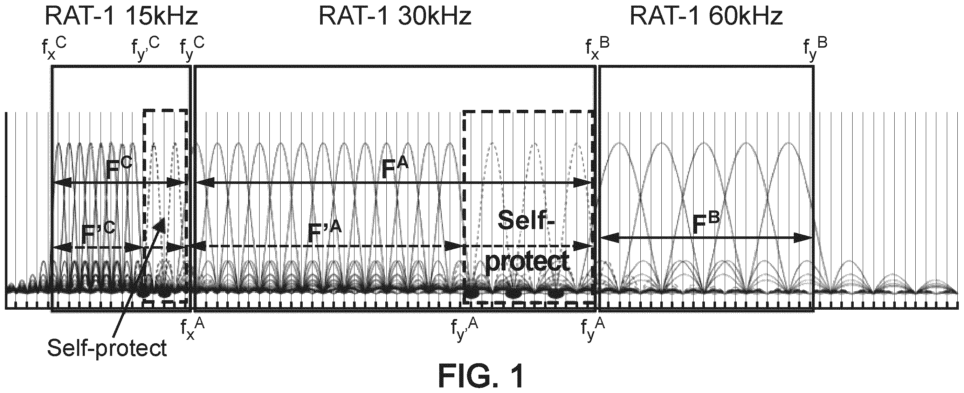

This is shown typically in figures 1 to 3, where one, some or all of the subcarriers plotted with dotted lines are kept.

This embodiment can be performed typically when the first UE seeks to protect itself from interference caused possibly by other UEs.

Alternatively, in an embodiment where information of a type of communication technology used by the second user equipment is obtained by the first equipment, the reducing of the first set by removing at least one subcarrier which is the closest to the subcarriers of the second set is performed if the first and second user equipment use different communication technologies.

In this embodiment, all the subcarriers of the first set, belonging to a frequency band of subcarriers which are the closest to the subcarriers of the second set, are removed from the first set.

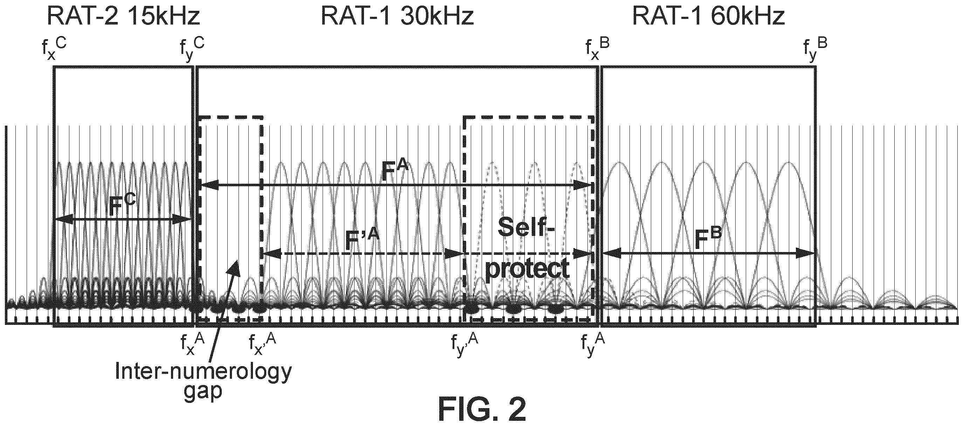

This is shown in figure 2 (left part) where all the subcarriers are removed from a so-called "inter-numerology gap".

In this embodiment, the first UE seeks to protect the other neighbor UEs from the interference the first UE can cause.

In an embodiment, obtaining information on the at least second communicating user equipment in the radiofrequency environment of the first communicating user equipment, can further comprise identifying whether subcarriers are free or occupied by the at least second communicating user equipment, and said first set can be constituted beforehand by at least one free subcarrier.

In this embodiment, identifying said at least one free subcarrier and/or said at least one occupied subcarrier can be based on resource reservation information, assistance information, power emission information, and/or sensing information obtained from said at least second communicating user equipment in the radiofrequency environment of the first communicating user equipment.

In an embodiment, the first set can be constituted beforehand by selecting said at least one free subcarrier according to priority criteria comprising:
- a first priority criterion for selecting said at least one free subcarrier which is neighbouring at least another free subcarrier, or which is neighbouring at least one subcarrier reserved by the second communicating user equipment and spaced by the first spacing, and/or;
- a second priority criterion for selecting said at least one free subcarrier which is neighbouring at least one occupied subcarrier by the second communicating user equipment, or which is neighbouring at least one subcarrier reserved by the second communicating user equipment and spaced by the second spacing, and the first and the second user equipment use a same communication technology, and/or;
- a third priority criterion for selecting said at least one free subcarrier which is neighbouring at least one occupied or reserved subcarrier by the at least second communicating user equipment and spaced by the second spacing, and the first and the second user equipment use different communication technologies.

In an embodiment, the first communicating user equipment can be configured to signal to its radiofrequency environment the selected at least one subcarrier remaining in the reduced first set for implementing the current communication.

According to a second aspect, the present disclosure can also relate to a device comprising a processing circuit to implement the method according to any one of the precedent claims.

According to a third aspect, the present disclosure can also relate to a computer program comprising instructions to cause a processor of a processing circuit to implement the method, when said instructions are executed by the processor.

### BRIEF DESCRIPTION OF DRAWINGS

The invention will be better understood upon reading the following description, given as an example that is in no way limiting, and made in reference to the figures which show:
- Figure 1 depicts several UEs (A, B, C) on a frequency band, wherein each UE occupies a set of subcarriers spaced by a given spacing. This representation is a special case where the respective spacings are multiple between each other (S^{A}= ka,Δf=30kHz, S^{B}= k_{B}Δf=60kHz, S^{C}= k_{C}Δf=15kHz; for example, this may correspond to Δf=15kHz, k_{A}=2, k_{B}=4, kc=1). A given UE A occupying here the central part of the frequency band implements the method presented above, and thereby protects itself from interference caused by the neighboring UE B, which occupies typically the right part of the frequency band. Since k_{A} is not a multiple of k_{B} UE A applies a "self-protect" band between f_{y'}^{A} and f_{y}^{A}, where only some subcarriers are left while other subcarriers are removed. On the other hand, since k_{A} is a multiple of kc UE A does not need to apply a "self-protect" band to protect itself from transmissions from UE C.
- Figure 2 is an alternative representation of Figure 1, on which the given UE and the UE at the left part of figure 2 use different communication technologies (RAT), and in this embodiment, the given UE protects from interferences the neighboring UE which occupies the left part of the frequency band and which uses a different RAT, by applying an "inter-numerology gap" between fₓ^{A} and f_{x'}^{A} where all the subcarriers are removed.
- Figure 3 shows a generic case of several UEs occupying a frequency band, in which the spacings of the subcarriers occupied by the UEs are not multiples between each other. The given UE applies the self-protect band to protect itself from neighbour UEs.
- Figure 4 is a diagram representation of the method, showing the steps implemented by the given UE to determine a first set F^{A} of free subcarriers in the frequency band (i.e. before the aforesaid "first set" reduction).
- Figure 5 is a schematic representation of a system including the given UE in a D2D communication environment, where several user equipment coexist, the given UE comprising a processing circuit for implementing the method.

In these figures, references identical from one figure to another designate identical or analogous elements. For reasons of clarity, the elements shown are not to scale, unless explicitly stated otherwise.

Also, the order of steps represented in these figures is provided only for illustration purposes and is not meant to limit the present disclosure which may be applied with the same steps executed in a different order.

### DESCRIPTION OF EMBODIMENTS

As presented above, the present disclosure makes it possible to overcome at least some of the limitations of the prior art discussed above, by proposing a method for performing resource allocation in a telecommunication system (possibly but not exclusively in a device-to-device communication system), where several SCS and possibly several RAT coexist in a same frequency band. The resource allocation procedure is carried out by a given UE, called above "the first user equipment", in its own resource allocation process with the purpose of achieving an optimal trade-off between performance loss due to inter-numerology interference and spectral efficiency loss due to protective measures.

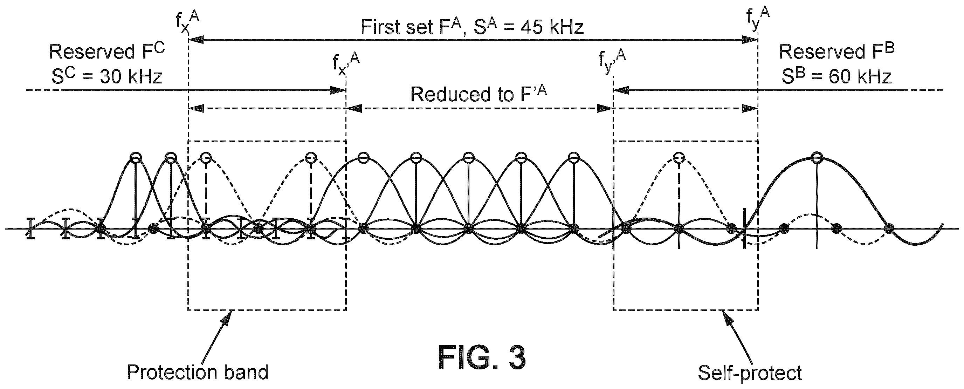

The right part of figure 3, for example, presents a subcarrier spectrum (amplitude versus frequency). The spectrum of an OFDM-based signal with subcarrier spacing Δf consists of overlapping sinc functions (cardinal sinus) with a main lobe of width 2*Δf, each one representing a subcarrier, where at the frequency of the k^{th} subcarrier all other subcarriers have zeros (orthogonality property when all subcarriers are equidistantly spaced). On the other hand, the subcarrier spectrum sidelobes present non-null values at other positions that might overlap with a maximum of another subcarrier if a spacing of a multiple of Δf is not respected between these subcarriers, or if the width of the subcarrier main lobe is different.

Then, according to the present specification, a UE is deemed to respect a subcarrier spacing (for example at 30kHz, or at 45kHz) when all the subcarriers this UE can use are spaced by a same rate of said spacing (30 or 45 kHz) between each subcarrier. When several UEs respect the same spacing and are placed onto a same virtual grid with equidistant points these UEs select subcarriers which are spaced by said spacing or a multiple of it. The distance between any two subcarriers (regardless of the UE using them) is a multiple of the subcarrier spacing. Therefore, the subcarriers selected by these UEs are orthogonal and will not interfere with each other.

Therefore, several UEs can coexist on the same frequency band when they respect the same subcarrier spacing. In this situation, a maximum amplitude of one curve representing the spectrum of a subcarrier coincides, on the frequency axis, with a zero crossing of the other subcarriers when all of these subcarriers respect a same spacing, thus avoiding interference, as the subcarriers are specifically arranged orthogonally to each other.

On the other hand, interference between several UEs occupying the same bandwidth but using different subcarrier spacing often occurs for at least part of the subcarriers because some of the subcarriers used by a UE with a given subcarrier spacing have sidelobes which are partially superimposed on some of the subcarriers used by another UE with a different carrier spacing. Therefore, the side lobes of the subcarrier curves can partially overlap, and the more the side lobe surfaces of the subcarriers of a UE overlap the subcarriers of another UE, the greater the interference. In particular, subcarriers spaced by a lower spacing are more impacted than subcarriers spaced by a higher spacing, as they extend on bandwidths of different sizes. For example, subcarriers with a spacing of 60 kHz use twice as much bandwidth as subcarriers with a spacing of 30 kHz, as shown in figures 1 and 2. In this case, if a partial protection band is set, the most impacted (interfered) subcarriers can be nulled, and the other ones can still be used.

In the example of figures 1 and 2, the spacings of the different UEs in stake are multiples of a same spacing basis Δf (which has a value of 15kHz in the shown example, but which can be different, such as 7,5kHz for example or any other value).

Therefore, it can be considered hereafter at first, a virtual frequency grid with points spaced by a base spacing Δf. All UEs configured with subcarrier spacing S^{A}=k_{A}Δf (subcarriers having the width of main lobe 2k_{A}Δf) can only use subcarriers placed on a virtual raster A consisting of points from the virtual grid spaced by k_{A}Δf. All UEs configured with subcarrier spacing k_{B}Δf (width of main lobe 2k_{A}Δf) can only use subcarriers placed on a virtual raster B consisting of points from the virtual grid spaced by k_{B}Δf.

Considering thus a UE A, with subcarrier spacing k_{A}Δf, using a frequency band A, and UE B, with different subcarrier spacing k_{B}Δf, using a frequency band B close or adjacent to frequency band A, UE A may suffer interference on some or all of its subcarriers in frequency band A, caused by the transmission of UE B in the neighbouring frequency band B. Subcarriers in frequency band A which belong to the virtual raster B are not interfered by the transmission of UE B (because they correspond to zero-crossings of subcarriers used by UE B). These are "common" subcarriers within frequency band A. Subcarriers in frequency band A which belong to the virtual raster B are said to be aligned with the subcarriers in frequency band B. The distance between any such two subcarriers is a multiple of S^{B} since they all belong to the virtual raster B.

When all subcarriers used by UE A are on the virtual raster of UE B (all subcarriers of UE A are common with raster B, as they are aligned with the subcarriers of UE B): UE A is not interfered by UE B. However, this only occurs when k_{A} is a multiple of k_{B}.

Subcarriers in frequency band A which do not belong to the virtual raster B (one subcarrier out of two in the example of figures 1 and 2, where UE A occupies the centre of figures 1 and 2, and UE B occupies the right part of figures 1 and 2) are interfered by the transmission of UE B (corresponding to points in raster A where subcarriers used by UE B have non-null sidelobe values). When k_{A} is not a multiple of k_{B}, there is at least one subcarrier in the frequency band A which is interfered by the transmission of UE B. UE A may need to protect itself from interference caused by UE B. To that end, UE A must refrain from using at least some of the subcarriers in frequency band A which do not belong to the virtual raster B, when they exist. The subcarrier spectrum being decaying, the most interfered subcarriers are the closest to the neighbouring interferer.

UE A has indeed specific interest of protecting itself from neighbouring transmissions particularly strong or damaging (e.g. with a higher subcarrier spacing, with strong measures of RSRP, or from a previous technology oblivious to current and/or future transmissions from UE A).

On the other hand, UE A transmission in frequency band A may cause interference upon subcarriers in another frequency band B.

Subcarriers in frequency band B which belong to the virtual raster A are not interfered by the transmission of UE A (correspond to zero-crossings of subcarriers used by UE A). These are "common" subcarriers within frequency band B. These are subcarriers of UE B that respect the subcarrier spacing S^{A}, or in other words the distance between these "common" subcarriers in frequency band B and any subcarrier in frequency band A is a multiple of S^{A}. When all subcarriers used by B are on the virtual raster A (all subcarriers of UE B being common with raster A, and thus respecting subcarrier spacing S^{A} with the subcarriers of UE A), UE B is not interfered by UE A: this only occurs if k_{B} is a multiple of k_{A}. This is the situation shown on figures 1 and 2 when UE B is the one in the right of the figures while UE A would be in the middle part of the figures.

By contrast, in the situation where UE A is in the middle part of the figures and UE C is in the left part of the figures, as depicted for example in figure 3, subcarriers in frequency band C which do not belong to the virtual raster A are interfered by the transmission of UE A (correspond to points on virtual raster C where side lobes of the spectrum of subcarriers used by UE A have non-null values). When k_{C} is not a multiple of k_{A}, there is at least one subcarrier in frequency band C which is interfered by the transmission of UE A. Therefore, if UE A needs to protect its neighbour UE C, whenever if kc is not a multiple of k_{A} (situation of figure 2 where UE A is in the middle of the figure and UE C is the raster on its left part), UE A must refrain from using at least some of the subcarriers in frequency band A which are close to frequency band C. The subcarrier spectrum being decaying, the most interfered subcarriers are the closest to the neighbouring interferer.

UE A has specific interest of protecting neighbouring transmissions:
- of users with higher priority,
- or from users for which interference from A can be particularly damaging (e.g. close to UE A, or having a lower subcarrier spacing, or using a less robust modulation and coding scheme, etc...),
- or of users that cannot protect themselves (e.g. using a different RAT, for example a previous technology, or a previous release of a same technology).

Generally, for a given UE, interference undergone by this given UE can depend on the subcarrier spacing values of the other UEs in the radiofrequency environment of the given UE, and can depend also on emission powers of these other UEs, e.g. when they are close.

The present disclosure proposes to remove from a set of possible subcarriers which can be used by such a given UE, subcarriers which are close to subcarriers that might be used by another UE, otherwise suffering and/or causing possible interference.

This implementation can find applications in device-to-device telecommunication systems, but also in any other type of telecommunication systems. Typically, the subcarriers allocation to user equipment performed by a base station can use the principles given above.

Figure 1 illustrates the case where the given UE (UE A, having its subcarriers on raster with 30kHz subcarrier spacing shown in the centre of the figure) has to cope with a possible interfering UE (UE B, having its subcarriers on a raster at 60kHz subcarrier spacing shown in the right part of the figure) and has to protect itself from the possible interference caused by the other UE B. To that end, the given UE A refrains from taking possible subcarriers which are near to the ones allocated to the other UE B (on the right part of figure 1) and which do not respect the spacing of the other UE B (60kHz) with subcarriers of the other UE B. In the example of figure 1, only the subcarriers plotted with dotted lines (respecting thus both spacings 30kHz and 60kHz) remain in this right part of the band allocated to the given UE A. In other words, in this example, since k_{A} is not a multiple of k_{B} UE A applies a "self-protect" band between f_{y'}^{A} and f_{y}^{A}, where only some subcarriers are left while other subcarriers are removed. The removed subcarriers do not respect subcarrier spacing S^{B} with the subcarriers used by UE B. The distance between the rightmost removed subcarrier of UE A (represented by a black dot) and the leftmost subcarrier used by UE B is 90kHz, which is not a multiple of S^{B}=60kHz.

The number of subcarriers of the given UE A which are to be removed from the set of possible subcarriers that the given UE A can use can depend typically on the power of emission of the other UE B *inter alia.*

Figure 1 shows also how another UE, UE C, having its raster at 15kHz (in the left part of figure 1), which can protect itself from interference possibly caused by the given UE, UE A, having its raster at 30kHz (in the centre of figure 1), by removing subcarriers which does not respect both spacings 15kHz and 30kHz. In this example, UE C implements thus the principle of the present description and therefore the same technology (RAT) as UE A. By contrast, since k_{A} is a multiple of k_{C} UE A does not need to apply a "self-protect" band to protect itself from transmissions from UE C. All subcarriers used by UE A respect subcarrier spacing S^{C} with the subcarriers used by UE C.

However, in cases where any other UE does not implement the principle of the present description because it uses another RAT for example, the communication of the given UE (in the centre of figure 1) can cause interference to this other UE.

Figure 2 shows therefore an embodiment of the present description where the given UE (having its raster in the centre of the figure) can protect, on the other hand, other UEs from interference the given UE can cause. Typically, when other UEs are not configured to protect themselves from interference caused by the given UE (because they use another RAT or have higher priority for example), the given UE may remove part(s) or all of the subcarriers close to the band edge(s) which are not interfered but may cause interference. This may result in creating a band gap where the given UE refrains from using any subcarrier of this gap. This situation is shown in figure 2, where the given UE (having the raster at 30kHz in the centre of figure 2) may cause interference to another UE (having its raster at 15kHz in the left part of figure 2). The given UE then prevents from any selection of a subcarrier to use in a band gap which is labelled as "inter-numerology gap" on figure 2, so as to avoid interference with subcarriers that the other UE (in the left part of figure 2) might use (near subcarrier f_{y}^{C}).

Therefore, in this embodiment, all the subcarriers of the given UE in the inter-numerology gap are removed from the set of possible subcarriers that the given UE can use.

The number of removed subcarriers and/or the size of the aforesaid inter-numerology gap in this embodiment depend on the risk that the other UEs can suffer from interferences caused by the given UE, and can depend typically on the emission power of the given UE *inter alia.*

Moreover, in some situations, the number of removed interfered and respectively interfering subcarriers are arranged in such a manner that some subcarriers remain in the protection band and can still be used, resulting in a partial gap.

The case shown on figures 1 and 2 is a particular embodiment where the spacings are multiples of each other (60kHz=2x30kHz and 30kHz=2x15kHz).

In this case, to avoid interference between the UEs having spacings respectively at 30kHz and 60kHz:
- the UE having the spacing at 60kHz may avoid removing any subcarrier which are the closest of the subcarriers of the neighbouring UE having the spacing at 30kHz,
- while the UE having the spacing at 30kHz has to remove subcarriers in its self-protection band and keeps the dashed lined subcarriers which do not interfere with the ones of the UE at 60kHz, since these kept subcarriers have the same spacing of 60kHz with the other UE's ones, and k_{B} = 4 is a multiple of k_{A}=2 (with Δf=15kHz).

However, this is a particular case. In a more general embodiment, the subcarriers which can be kept are advantageously finely determined according to the respective spacings of the given UE and the other UE, given that k_{B} and k_{A} may not be multiples of each other.

An example of this situation is illustrated on figure 3.

As shown on this figure, the subcarriers which are removed from this set are at least the ones which do not respect the subcarriers spacings of both the given and the other UE. On the right part of figure 3:
- the given UE is UE A in the middle of figure 1, at 45 kHz in the given example)
- and of the other UE is UE B in the right part of figure 3, at 60 kHz in the example).

Subcarriers of the given UE which do not respect the subcarrier spacing of the other UE are removed (here, two subcarriers). Finally, the remaining possible subcarriers for the given UE in a frequency band close to the subcarriers of the other UE (UE B near the right limit f_{y}^{A} that can be used by the given UE) are the ones (plotted in dashed lines) which respect the subcarriers spacings of the other UE. These remaining subcarriers plotted in dashed lines do not suffer interference from the other UE (UE B). They may still cause some interference upon the other UE (UE B). In the present case, UE-A may decide to use the dashed subcarrier based on some criteria: since k_{A} is smaller than k_{B}, and/or the distance between this dashed subcarrier and the closes subcarrier used by UE B is large (in this case, 120kHz) the interference upon UE B is small.

On the other hand, on the left part of figure 3:
- the given UE (UE A in the middle of figure 1, at 45 kHz in the given example)
- and of the other UE (UE C in the left part of figure 3, at 30 kHz in the example).

Subcarriers of the given UE which do not respect the subcarrier spacing of the other UE and which are close to the left limit fₓ^{A} are removed (here, one subcarrier). Finally, the remaining possible subcarriers for the given UE in a frequency band close to the subcarriers of the other UE (UE C near the left limit fₓ^{A} that can be used by the given UE) are the ones (plotted in dashed lines) which respect the subcarriers spacing of the other UE. These remaining subcarriers plotted in dashed line do not suffer interference from the other UE (UE C).

However, these remaining subcarriers may still cause some interference upon the other UE (UE C). In the present case, and as opposed to the decision taken in the case of neighbouring UE B, UE A may decide further to remove at least one of the dashed subcarrier based on some criteria: since k_{A} is higher than kc and/or the smallest distance between a dashed subcarrier and the closest subcarrier used by UE C is large (in this case, 30kHz), the interference upon UE C is potentially important. If there is a need to apply reinforced protection to UE C, then UE A may refrain from using at least the dashed subcarrier closer to the left limit fₓ^{A}. It may still use the other dashed subcarrier, which is 120kHz away from the closest subcarrier used by UE C, or it may decide to remove it based on some other criterion (e.g. UE C may be from a different RAT, or may have a higher priority).

The dashed subcarriers that are decided to be kept by UE A in frequency band are not necessarily successive/adjacent with the ones in the reduced F'^{A} band.

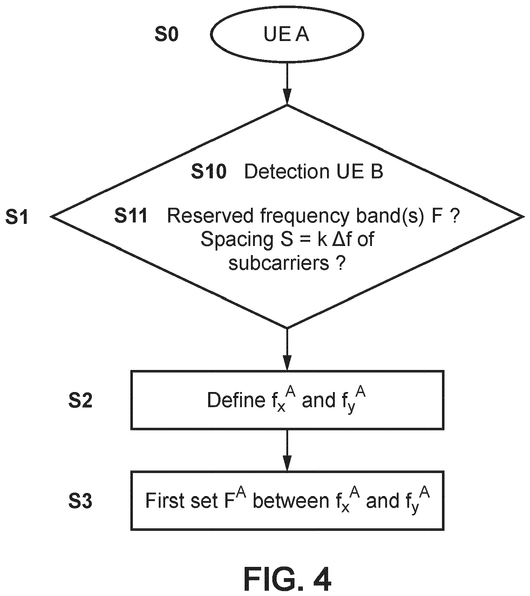

As a result of removing subcarriers, the first set F^{A}, between fₓ^{A} and f_{y}^{A}, of subcarriers identified as available for transmission (or "free") is reduced to a reduced set F'^{A} containing an inferior number of subcarriers. As represented on figures 1 to 3, the reduced set F'^{A} can span on the intervals represented by the dashed arrows and comprises at least one subcarrier on these intervals. At each band edge where there is a neighbouring UE detected as being active and having a different subcarrier spacing, the first UE removes at least one subcarrier and hence creates a protection band (for example between fₓ^{A} and f_{x'}^{A} and/or between f_{y'}^{A} and f_{y}^{A} depending on the considered placement of the neighbouring second UE). The first UE may remove up to a first number N1 of interfered subcarriers with N1 equal to or superior to 0. The first UE may further remove up to a second number N2 of interfered subcarriers with N2 equal to or superior to 0. When the method for removing subcarriers is applied, N1+N2 is equal or superior to 1; the UE may sometimes choose to not apply the removing method based on some criteria (which are detailed below in reference to figure 4).

If it is considered that the situation occurs at the right side of the band, the protection band spans between f_{y'}^{A}and f_{y}^{A}. The number of subcarriers in the protection band is at least N1+N2. When N2=0, the protection band is also referred to as "self-protect" band (only N1 interfered subcarriers are removed). When the number of subcarriers in the protection band is equal to N1+N2, the protection band is also referred to as an inter-numerology gap (all subcarriers are removed).

In the more general case, the protection band is a partial gap (some subcarriers in the protection band are not removed). The remaining subcarriers are not necessarily consecutive, and not necessarily adjacent to the subcarriers remaining in F'^{A} and outside of the protection band. Subcarriers between fₓ and f_{y} may belong to F'^{A} or may be removed.

The description above relates to the method for reducing efficiently the aforesaid first set F^{A} of possible subcarriers, to provide an optimized reduced first set F'^{A}, in view to avoid interference.

The following of the description gives examples of steps of the method which can be implemented to build this first set F^{A} beforehand.

These steps are depicted on Figure 4. In this diagram, the given UE (denoted as UE A in the different figures) has to identify the available frequency band. Therefore, the given UE seeks to define an interval F^{A} between fₓ^{A} and f_{y}^{A} of free subcarriers, with a given subcarriers spacing of S^{A}=k_{A}Δf, in the frequency band (corresponding to the middle part of figures 1, 2 and 3).

To do so, during a first step S0, UE A probes its environment in order to detect neighbouring user equipment(s) and the potential available frequency band.

During step S1, in the event of a detection of another UE at substep S10, the given UE may be further configured to receive information about the other UE during another substep S11. This may be done for example by decoding a control channel, or by receiving information from another colocalized module. In some cases, such information may not be available and only a detection based on a power level is possible. Substeps S10 and S11 can be performed simultaneously by the given UE, or in any order.

In a preferred embodiment, such information detected by the given UE may comprise the part of the frequency bands F used by the other UE, i.e. the subcarriers occupied and/or reserved by the other UE, and the subcarriers spacings S of both occupied subcarriers and detected free subcarriers. In the situation where several UEs are identified, or several parts of the frequency band are occupied or reserved by a single/several other UE(s), the given UE is configured to identify all the occupied frequency band parts F, and the spacing(s) of their respective subcarriers.

In details, this identification of the occupied and free subcarriers can be based on, if available:
- information about the resource reservation made by the other UE(s) using the same technology (RAT) as the given UE,
- assistance information from the other UE(s) using the same technology as the given UE, and/or
- sensing information transferred from a co-located module using a different technology.

Assistance information may include information about a preferred or not preferred and or conflicted set of resource, or information about resource reservation performed by other UEs. Sensing information may include information about resources reserved by users of the other technology, priority or received power (e.g. RSRP levels) of other transmissions, and more generally any information contained in a sidelink control channel (e.g. MCS, pilot structure, RRI, periodicity of the transmission etc).

Additionally, the given UE may also collect data on various parameters of the occupied subcarriers, such as Reference Signal Received Power (RSRP), the other UE(s) technology(ies) and numerology(ies), etc.

Therefore, at the end of step S1, the given UE should have highlighted several free subcarriers or groups of subcarriers. At step S2, the given UE can then determine at least an available frequency interval between fₓ^{A} and f_{y}^{A} on which these detected free subcarriers are located.

These boundaries fₓ^{A} and f_{y}^{A} thus enable the given UE to constitute said first set F^{A} of free subcarriers at step S3.

In the case where several frequency intervals with free subcarriers are identified at steps S1 and S2, the given UE may privilege constituting the first set F^{A} with the frequency interval comprising the largest amount of free subcarriers.

If possible and if applicable, the given UE can also privilege determining the boundaries fₓ^{A} and f_{y}^{A} at step S2 as far as possible from the detected neighbouring occupied/reserved frequency band(s), in order to avoid potential interference with neighbouring UE(s), when information available about the neighbouring UEs allows to identify that they may be potentially interfering with the future transmission from UE A.

Alternatively, or in combination with any one of the previous embodiments, the given UE can privilege constituting the first set F^{A} according to the neighbouring UE(s) subcarriers spacing(s) and/or other UE(s) technology(ies) (if available) and/or according to priority criteria.

These priority criteria can be, by order of importance and for instance:
- a first priority criterion: the neighbouring subcarriers are either free or reserved by the other UE with a same subcarrier spacing;
- a second priority criterion: the neighbouring subcarriers are occupied or reserved by the other UE with a different subcarrier spacing and the other UE uses the same technology as the given UE;
- a third priority criterion: the neighbouring subcarriers are occupied or reserved by the other UE with a different subcarrier spacing and the other UE uses a different technology.

The relative values of k_{A} and k_{B} may constitute a supplementary criterion, for example a multiple or a divisor spacing may be preferred in order to ensure either protection of the neighbour or self-protecting from the neighbour's emission.

According to another embodiment, the first set F^{A} can alternatively be constituted by the given UE based on a subcarrier exclusion workflow. For this, a first candidate set of subcarriers is determined beforehand, for instance after step S1 of Figure 4, and can be initialized according to the allocation procedure as detailed in TS 38.214 section 8.1.4 of the LTE/NR V2X specifications. This candidate set may then comprise all candidate single-slot and detected free subcarriers (equivalent to step 4 in TS 38.214).

Then, the given UE can exclude from the candidate set the following non-exhaustive list of subcarriers:
- non-monitored subcarriers and potential periodical reservations made in non-monitored subcarriers (equivalent to step 5 in TS 38.214);
- subcarriers which are detected to be reserved based on a RSRP threshold and/or on priority values (equivalent to step 6 in TS 38.214); and/or
- subcarriers neighbouring subcarriers spaced by a different spacing (for instance, the subcarriers close to the boundary at fₓ^{C} or fₓ^{A} between the left part and middle part on Figures 1 to 3).

At the end of the exclusion process, it is possible that there are no remaining subcarriers or not a sufficient number of subcarriers (typically at least 15 to 20% of the whole number of possible subcarriers) in said constituted first set F^{A}. In this situation, the given UE can implement a subcarriers reinclusion process. In this, the given UE reinclude one or several subcarriers, according to one or several strategies, such as:
- Reinclude subcarriers neighbouring:
   ∘ the subcarriers of the other UE using the same technology as the given UE;
   ∘ the subcarriers with a higher spacing and reserved by the other UE using the same technology as the given UE (among the subcarriers of the right part of the frequency band on Figures 1 to 3);
   ∘ the subcarriers with a lower spacing and reserved by the other UE using the same technology as the given UE (among the subcarriers of the left part of the frequency band on Figures 1 to 3); and/or
   ∘ the subcarriers reserved by the other UE using a different technology (as represented for instance on the left part of the frequency band on Figure 2).
   ∘ For all above criteria, the relative values of k^{A} and k^{B} may constitute a supplementary criterion, for example resources having a multiple or a divisor spacing may be preferred to be reincluded in priority in order to ensure either protection of the neighbour or self-protecting from the neighbour's emission.
- Reinclude some of or all the excluded subcarriers in the candidate set;
- If all the subcarriers have been excluded based on their RSRP, it is possible to use another RSRP threshold and reinclude in the candidate set a minimum amount of subcarriers respecting this new threshold (equivalent to step 7 in TS 38.214);
- Apply re-inclusion strategies if the candidate set is void.

Then, the given UE can select part or all of the remaining subcarriers after exclusion and/or reinclusion processes to constitute the first set F^{A}.

Once the first set F^{A} is constituted by any one or a combination of the described embodiments above described with reference to figure 4, the given UE establishes a protocol to identify the subcarriers to be removed or kept in the first set F^{A}, in order to produce the reduced first set F'^{A}. This process depends on the neighbouring other UE(s) and has been described above relatively to figure 1 to 3. The removed/kept subcarriers are located in the protection band(s), self-protect and/or partial or full inter-numerology gap bands, framed by dashed lines on figure 1 to 3.

According to an embodiment, the given UE can be configured to reduce the number of the free subcarriers in the first set F^{A} to prevent the potential interference between UE(s) by applying one or several restrictions on the identified protection band(s) (self protect and/or partial or full inter-numerology gap, as explained above and represented on figures 1 to 3). For example, the given UE can leave one or several unoccupied subcarriers in the protection band(s) and/or using a more robust so-called Modulation and Coding Scheme (MCS) for the subcarriers remaining in the protection band(s).

Moreover, according to another embodiment, the protection band(s) (self protect and/or partial or full inter-numerology gap) type and size can also be defined. The size of the protection band is the frequency span.

Protection band size and type are determined based on the neighbouring subcarrier spacing(s), neighbouring other UE technology, neighbouring subcarriers Modulation and Coding Scheme (MCS), the priority of the transmission of the given UE, position in the allocation grid/PHY channel type, on/off configuration of re-evaluation/pre-emption mechanisms, the type of the transmission of the given UE and/or signalled capability of creating protective bands of the neighbouring other UE(s).

The following are examples that can be implemented by the given UE for determining protection band(s) size and/or type:
- If subcarriers in the first set F^{A} have sensitive MCS or high priority for transmission and k_{A} is not a multiple of k_{B}, the protection band(s) has(have) large frequency span and are of self-protection type;
- If the neighbouring subcarriers are occupied by the other UE using a different technology from the given UE and k_{B} is not a multiple of k_{A}, the protection band(s) is a sufficiently large inter-numerology gap;
- If the neighbouring subcarriers are occupied by the other UE using the same technology as the given UE and k_{B} is neither a divisor nor a multiple of k_{A}, the protection band is set partial;

- If the neighbouring subcarriers are spaced by a divisor spacing and are occupied by the other UE using the same technology as the given UE, and there is not any re-evaluation/pre-emption configured in the frequency band, the protection band is set full; and/or
- If the neighbouring subcarriers are spaced by a divisor spacing and are occupied by the other UE using the same technology as the given UE, a re-evaluation/pre-emption and optionally a periodic transmission on the subcarriers are configured in the frequency band, then the protection band size is set to zero. In this case, the other UE is considered to be able to adapt to the given UE and to protect itself (with a self-protect or equivalent, as depicted on figure 1 for left part subcarriers) from potential interference.

After having determined the subcarriers to be removed, the given UE may not transmit on these either by puncturing the transmission or by rate matching around removed subcarriers.

The reduced first set F'^{A} thus contains all the available subcarriers with the same subcarrier spacing S^{A} which have been identified to not significantly interfere with the neighbouring UE(s), as detailed above in reference to figures 1 to 3.

Then, the given UE is configured to select subcarriers in the reduced first set F'^{A}, wherein some or all the subcarriers are used for communication and transmission, immediately, temporarily, and/or periodically.

According to an embodiment, the given UE can also be configured to signal to its environment and to neighbouring UE(s) information relative to the created protection band(s), if applicable, and/or on its subcarrier allocation procedure and reservation (e.g. resulting allocation, capabilities, etc).

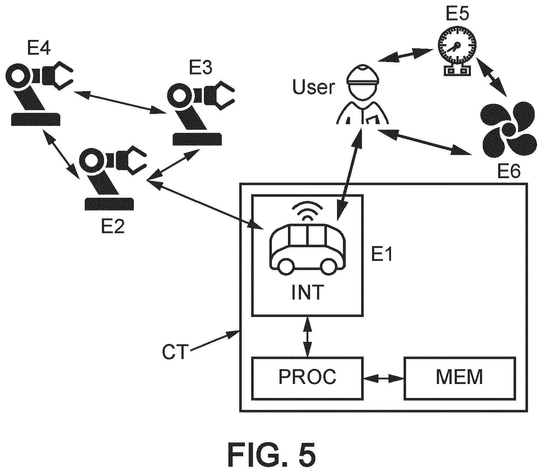

As presented above, the method can be implemented by a UE such as the device E1 of figure 5, here in a D2D communication environment as for an example. The device E1 can comprise a processing circuit including typically:
- a communication interface INT (connected to an antenna for example),
- a processor PROC connected to the communication interface, and
- a memory MEM accessible by the processor PROC and able to store, *inter alia,* data of instructions of a computer program according to the present description, causing thereby the implementation of the method above when the instructions are executed by the processor PROC.

Typically, the device E1 can be linked to an interface of a sensor, or a robot, or any machine in a plant for example, in the context of Internet of Things (IoT) for example. Alternatively, it can be a part of a smartphone or any connected device of a user.

## Claims

1. A method performed by a first communicating user equipment configured to use subcarriers from a first set of subcarriers spaced by a first spacing S^{A}= ka,Δf where k_{A} is an integer equal or superior to 1 and Δf is a base frequency spacing, the method comprising:
- obtaining information on at least a second communicating user equipment, in a radiofrequency environment of the first communicating user equipment, and configured to use subcarriers from a second set of subcarriers spaced by a second spacing S^{B}= k_{B}Δf where k_{B} is an integer equal or superior to 1,
wherein, upon determination by the first user equipment that said second spacing is different from the first spacing and if k_{A} is not a multiple of k_{B}, the method further comprises:
- reducing the first set by removing at least one subcarrier which is the closest to the subcarriers of the second set and which does not respect said second spacing with the subcarriers of the second set, and
- selecting for a current communication at least one subcarrier remaining in the reduced first set.

2. The method of claim 1, wherein said removing from the first set is applied to a first chosen number of subcarriers which are the closest to the subcarriers of the second set and which do not respect said second spacing with the subcarriers of the second set.

3. The method of claim 2, wherein said first number depends on at least one of a radiofrequency power received from said second user equipment, and/or relative values of k_{A} and k_{B}.

4. The method according to any one of the precedent claims, wherein, if k_{B} is not a multiple of k_{A}, the first set is reduced by further removing at least one subcarrier which is the closest to the subcarriers of the second set and which respects said second spacing with the subcarriers of the second set.

5. The method of claim 4, wherein said further removing from the first set is applied to a second chosen number of subcarriers of the first set which are the closest to the subcarriers of the second set and which respect said second spacing with the subcarriers of the second set.

6. The method according to claim 5, wherein said second number depends on at least one of:
- an emission power of said first user equipment,
- a priority associated to the current communication of the first user equipment and/or to a communication of the second user equipment using subcarriers from the second set of subcarriers,
- and relative values of k_{A} and k_{B}.

7. The method according to any one of claims 5 and 6, wherein information of a type of communication technology used by the second user equipment is obtained by the first equipment, and the second number further depends on whether the first and second user equipment use different communication technologies.

8. The method according to any one of the precedent claims, wherein at least one subcarrier among a plurality of subcarriers of the first set which are the closest to the subcarriers of the second set and which respect said second spacing with the subcarriers of the second set is kept in said first set.

9. The method according to any one of claims 1 to 8, wherein information of a type of communication technology used by the second user equipment is obtained by the first equipment, and wherein the reducing of the first set by removing at least one subcarrier which is the closest to the subcarriers of the second set is performed if the first and second user equipment use different communication technologies.

10. The method according to claim 9, wherein all the subcarriers of the first set, belonging to a frequency band of subcarriers which are the closest to the subcarriers of the second set, are removed from the first set.

11. The method according to any one of the preceding claims, wherein obtaining information on the at least second communicating user equipment in the radiofrequency environment of the first communicating user equipment, further comprises identifying whether subcarriers are free or occupied by the at least second communicating user equipment, and wherein said first set is constituted beforehand by at least one free subcarrier.

12. The method according to any one of the preceding claims, wherein the first set is further constituted beforehand by selecting said at least one free subcarrier according to priority criteria comprising:
- a first priority criterion for selecting said at least one free subcarrier which is neighbouring at least another free subcarrier, or which is neighbouring at least one subcarrier reserved by the second communicating user equipment and spaced by the first spacing, and/or;
- a second priority criterion for selecting said at least one free subcarrier which is neighbouring at least one occupied subcarrier by the second communicating user equipment, or which is neighbouring at least one subcarrier reserved by the second communicating user equipment and spaced by the second spacing, and the first and the second user equipment use a same communication technology, and/or;
- a third priority criterion for selecting said at least one free subcarrier which is neighbouring at least one occupied or reserved subcarrier by the at least second communicating user equipment and spaced by the second spacing, and the first and the second user equipment use different communication technologies.

13. The method according to any one of the preceding claims, wherein the first communicating user equipment is configured to signal to its radiofrequency environment the selected at least one subcarrier remaining in the reduced first set for implementing the current communication.

14. A device comprising a processing circuit to implement the method according to any one of the precedent claims.

15. A computer program comprising instructions to cause a processor of a processing circuit to implement the method according to any one of claims 1 to 13, when said instructions are executed by the processor.
